# EUROPÄISCHE PATENTSCHRIFT

(11) **EP 2 340 187 B1**
(45) Veröffentlichungstag und Bekanntmachung des Hinweises auf die Patenterteilung: **20.03.2019**
(21) Anmeldenummer: 09748014.9
(22) Anmeldetag: 19.09.2009
(51) Int. Cl.: B60Q 1/38

(54) **VERFAHREN UND VORRICHTUNG ZUR AUTOMATISCHEN FAHRTRICHTUNGSANZEIGE**
METHOD AND APPARATUS FOR AUTOMATED DIRECTION INDICATION
PROCÉDÉ ET DISPOSITIF D'INDICATION AUTOMATIQUE DE CHANGEMENT DE DIRECTION

(30) Priorität: 22.10.2008 DE 102008043053
(43) Veröffentlichungstag der Anmeldung: 06.07.2011
(73) Patentinhaber: Continental Teves AG & Co. OHG, 60488 Frankfurt am Main (DE); Conti Temic Microelectronic GmbH, 90411 Nürnberg (DE)
(72) Erfinder: LÜKE, Stefan, 61191 Rosbach vor der Höhe (DE); HAPP, Matthias, 99102 Erfurt-Niedernissa (DE)
(86) Internationale Anmeldenummer: PCT/DE2009/001323
(87) Internationale Veröffentlichungsnummer: WO 2010/045908

(56) Entgegenhaltungen:
- EP-A- 0 640 903
- EP-A- 1 346 877
- WO-A-03/105108
- WO-A-2004/094186
- DE-A1- 10 251 357
- DE-A1- 10 355 807
- DE-A1-102004 048 009
- DE-A1-102006 020 631

## Beschreibung

Die Erfindung betrifft ein Verfahren und eine Vorrichtung zur automatischen Fahrtrichtungsanzeige gemäß Anspruch 1 bzw. 12.

Aus dem Stand der Technik ist der sogenannte Spurwechselassistent (LCA: Lane Changing Assistant) bekannt, der den Fahrer beim Spurwechsel vor drohenden Kollisionen warnen soll. Der Spurwechselassistent wird in der Regel mit dem Aktivieren des Blinkers durch den Fahrer eingeschaltet, überwacht die Nachbar-Fahrspur auf mögliche Kollisionsobjekte und warnt den Fahrer bei einem Fahrzeug im überwachten Bereich.
Eine weitere Ausgestaltung eines Spurwechselassistenten wird in der Schrift EP1346877 offenbart. Dort wird vorgeschlagen alternativ zur Erkennung einer Spurwechselabsicht Mittel zur Erfassung einer Änderung des Lenkwinkels vorzusehen, die bei einer Erfassung einer Änderung des Lenkwinkels ein eine Spurwechselabsichtsabsicht anzeigendes Signal erzeugen.
Eine Weiterentwicklung ist die Spurwechselunterstützung (LCS: Lane Changing Support), die den Fahrer aktiv beim Spurwechsel durch automatisches Eingreifen in die Lenkung unterstützt, um eine drohende Kollision mit Fahrzeugen im toten Winkel auf der Nachbar-Fahrspur zu verhindern.

Schließlich sind aus dem Stand der Technik Spurhalteassistenten bzw. Spurassistenten (LDWS: Lane Departure Warning System) bekannt, die einen Fahrer bei einem offensichtlich unbeabsichtigten Verlassen der eigenen Fahrspur warnen. Einen Schritt weiter gehen Spurhalteunterstützungssysteme (LKS: Lane Keeping System), die aktiv in die Lenkung eingreifen können, um ein unbeabsichtigtes Verlassen der eigenen Fahrspur zu vermeiden. Insbesondere werden Fahrzeuge durch gezielte Aufschaltung von Lenkmomenten in der Mitte der Fahrbahn zentriert. Sowohl LDW- als auch LK-Systeme werden in der Regel durch das Einschalten des Blinkers temporär deaktiviert, da hierdurch ein vom Fahrer beabsichtigter Spurwechsel signalisiert wird und kein Eingriff in die Lenkung erfolgen soll. Ein soches System ist z.B. in der Schrift EP 0640903 A1 offenbart.

Weiterhin sind aus dem Stand der Technik sogenannte Komfortblinker bzw. Blinkerassistenten bekannt, bei denen ein Fahrer nur kurz die Fahrtrichtungsanzeige betätigen muss, damit diese ca. 3-4mal angezeigt und dann selbstständig abgeschaltet wird. Nachteilig ist hierbei jedoch, dass in manchen Situationen die Fahrtrichtungsanzeige zu früh abgeschaltet wird, beispielsweise bei lang andauernden Fahrspurwechseln insbesondere bei hohen Geschwindigkeiten und bei nicht sofort durchgeführten Fahrspurwechseln.

Aufgabe der vorliegenden Erfindung ist es nun, ein Verfahren und eine Vorrichtung zur automatischen Fahrtrichtungsanzeige vorzuschlagen.

Diese Aufgabe wird durch ein Verfahren zur automatischen Fahrtrichtungsanzeige mit den Merkmalen nach Anspruch 1 und eine entsprechende Vorrichtung mit den Merkmalen nach Anspruch 12 gelöst. Weitere Ausgestaltungen der Erfindung ergeben sich aus den abhängigen Ansprüchen.

Ein wesentlicher Gedanke der Erfindung besteht darin, ein Spurhalteunterstützungssystem und/oder einen Spurassistenten zum automatischen Ansteuern einer Fahrtrichtungsanzeige wie eines Blinkers zu verwenden. Insbesondere können nach der Erfindung eine Fahreraktivität und/oder Fahrzeugposition mittels eines Spurhalteunterstützungssystems und/oder eines Spurassistenten detektiert und davon abhängig eine Fahrtrichtungsanzeige automatisch gesteuert werden. Bei den Spurhalteunterstützungs- bzw. LK-Systemen und den Spurassistenten bzw. LDW-Systemen wird in der Regel vom Fahrer gefordert und technisch überwacht, dass dieser in Notsituationen dennoch die Hände am Lenkrad behält. Normalerweise bewirkt ein LK-System eine leichte Zentrierung des Fahrzeugs in Richtung Fahrspurmitte, die der Fahrer jedoch jederzeit überlenken kann. LK- und LDW- Systeme implementieren daher eine Fahreraktivitätsüberwachung, bei der insbesondere detektiert wird, ob ein Handmoment des Fahrers (Fahrerhandmoment) auf die Lenkung einwirkt. Diese Fahrerhandmomentüberwachung kann nun erfindungsgemäß für die Automatisierung einer Fahrtrichtungsanzeige verwendet werden. Weiterhin wird von LK- und LDW-Systemen eine Fahrspurerkennung durchgeführt, die ferner das Ermitteln der Fahrzeugposition in Bezug auf Fahrspuren ermöglicht. Diese Fahrzeugpositionserkennung kann ebenfalls erfindungsgemäß zur Automatisierung der Fahrtrichtungsanzeige genutzt werden.
Die vorliegende Erfindung betrifft nun gemäß einer Ausführungsform ein Verfahren zur automatischen Fahrtrichtungsanzeige mit den folgenden Schritten:
- Detektieren einer Fahreraktivität und/oder Fahrzeugposition mittels eines Spurhalteunterstützungssystems und/oder eines Spurassistenten und
- Aktivieren oder Deaktivieren einer Fahrtrichtungsanzeige abhängig von dem detektierten auf das Lenkrad eines Fahrzeugs einwirkenden Fahrerhandmoment und von der detektierten Fahrzeugposition.
Beispielsweise kann ein Blinker automatisch gesetzt werden, wenn ein Spurhalteunterstützungssystem eine Fahreraktivität erkennt, die auf einen Spurwechselvorgang hinweist, und ein Spurassistent ferner erkennt, dass eine Fahrbahnmarkierung überfahren wird. Als ein weiteres Beispiel kann das erfindungsgemäße Verfahren auch zum automatischen Abschalten eines Blinkers verwendet werden. Hierzu wird anhand des detektierten Fahrerhandmoments und der detektierten Fahrzeugsposition das Ende eines Fahrspurwechsels ermittelt und dann die Fahrtrichtungsanzeige als der Blinker deaktiviert bzw. abgeschaltet.
Dieses Verfahren kann in Form eines Algorithmus in ein LK- oder LDW-System implementiert werden, das dadurch zusätzlich zur automatischen Aktivierung oder Deaktivierung einer Fahrtrichtungsanzeige ausgebaut werden kann. Eine Fahreraktivität ist ein auf das Lenkrad des Fahrzeugs einwirkendes Handmoment des Fahrers, beispielsweise bei einem beabsichtigten Fahrspurwechsel, bei dem das LK-System übersteuert wird. Eine Fahrzeugposition kann insbesondere mit einem Kamera-basierten LK- oder LDW-System ermittelt werden.

Das Detektieren einer Fahreraktivität weist das Detektieren eines auf das Lenkrad eines Fahrzeugs einwirkenden Fahrerhandmoments mittels eines Spurhalteunterstützungssystems und/oder eines Spurassistenten auf.
Weiterhin kann das Detektieren eines auf das Lenkrad eines Fahrzeugs einwirkenden Fahrerhandmoments das Detektieren des Fahrerhandmoments während eines vorgegebenen Zeitraums aufweisen. Es kann beispielsweise vorgesehen sein, dass ab einem bestimmten Fahrerhandmoment ein Timer gestartet wird, der für eine vorbestimmte Zeitdauer eine Messung des auf das Lenkrad einwirkenden Fahrerhandmoments triggert. Nach Ablauf der vorbestimmten Zeitdauer kann der Timer dann den Messvorgang beenden. Somit wird vermieden, dass sehr kurze Lenkmanöver beispielsweise zum Zentrieren des Fahrzeugs in der Mitte einer Fahrspur zu einer automatischen Fahrtrichtungsanzeige führen.
Weiterhin kann das Aktivieren einer Fahrtrichtungsanzeige abhängig vom detektierten Fahrerhandmoment folgende Schritte aufweisen:
- Vergleichen des detektierten Fahrerhandmoments mit einem vorgegebenen Fahrerhandmoment und
- Aktivieren der Fahrtrichtungsanzeige, wenn das Vergleichen ergibt, dass das detektierte Fahrerhandmoment das vorgegebene Fahrerhandmoment überschreitet.
Hierdurch kann vermieden werden, dass nur leichte Bewegungen des Lenkrads durch den Fahrer, die keine gewollte Fahrtrichtungsänderung bewirken sollen, zu einer automatischen Aktivierung einer Fahrtrichtungsanzeige führen.

Das Aktivieren einer Fahrtrichtungsanzeige kann ferner abhängig vom detektierten Lenkwinkel sein und kann folgende Schritte aufweisen:
- Ermitteln einer Regeldifferenz zwischen dem detektierten Lenkwinkel und einem Solllenkwinkel für eine Spurhaltung und
- Aktivieren der Fahrtrichtungsanzeige, wenn die ermittelte Regeldifferenz eine vorgegebene Regeldifferenz überschreitet.

Das Aktivieren einer Fahrtrichtungsanzeige kann ferner folgende Schritte aufweisen:
- Überwachen der Umgebung des Fahrzeugs mittels nach hinten und zur Seite gerichteten Sensoren eines Umgebungserfassungssystems und
- Sperren oder Freigeben der automatisierten Fahrtrichtungsanzeige in Abhängigkeit vom Überwachen.

Beispielsweise kann die automatisierte Fahrtrichtungsanzeige gesperrt werden, wenn ein Objekt durch das Überwachen der Umgebung detektiert wurde. Hierdurch kann vermieden werden, dass die Fahrtrichtungsanzeige automatisch aktiviert wird, obwohl sich beispielsweise ein Fahrzeug in der Nachbar-Fahrspur befindet.

Das Aktivieren einer Fahrtrichtungsanzeige kann ferner folgende Schritte aufweisen:
- Messen der Fahrspurmarkierungen und Überwachen von Relativposition und Bewegung des Fahrzeugs zu den gemessenen Fahrspurmarkierungen und Sperren oder Freigeben der automatisierten Fahrtrichtungsanzeige in Abhängigkeit vom Überwachen.

Beispielsweise kann das automatische Setzen eines Blinkers freigegeben werden, wenn das Messen der Fahrspurmarkierungen und Überwachen von Relativposition und Bewegung des Fahrzeugs zu den gemessenen Fahrspurmarkierungen ergibt, dass das Fahrzeug einen Fahrspurwechsel auf die linke Fahrspur durchführt.

Weiterhin kann das Aktivieren einer Fahrtrichtungsanzeige folgende Schritte aufweisen:
- Überwachen des Innenraums des Fahrzeugs,
- Erfassen von Reaktionen des Fahrers im Rahmen der Innenraumüberwachung und
- Sperren oder Freigeben der automatisierten Fahrtrichtungsanzeige abhängig von einer erfassten Fahrerreaktion.

Beispielsweise kann abhängig von der Blickrichtung des Fahrers die automatisierte Fahrtrichtungsanzeige freigegeben oder gesperrt werden.

Wenn der Fahrer zur Seite blickt, kann die automatisierte Fahrtrichtungsanzeige freigegeben werden, während sie gesperrt wird, wenn der Fahrer nach vorne in Fahrtrichtung blickt.
Das Sperren oder Freigeben der automatisierten Fahrtrichtungsanzeige kann ferner abhängig von einer Bewertung von Wahrscheinlichkeitsinformationen durchgeführt werden. Beispielsweise kann eine Wahrscheinlichkeit für einen gewollten Fahrspurwechsel aus Fahrzeuginnenraum- oder Umgebungsüberwachungsinformation oder Relativpositionsinformationen des Fahrzeugs zu Fahrspurmarkierungen ermittelt werden.
Schließlich kann das Verfahren durch die folgenden Schritte gekennzeichnet sein:
- Aktivieren einer Fahrtrichtungsanzeige mittels eines Blinkerassistenten vom Fahrer, in dem Fall, dass die Fahrtrichtungsanzeige vorher nicht aktiviert ist,
- Erfassen eines Fahrspurwechsels mittels eines Spurhalteunterstützungssystems und/oder eines Spurassistenten und/oder basierend auf Navigationsinformationen und
- Deaktivieren der Fahrtrichtungsanzeige abhängig von dem detektierten Fahrerhandmoment und der Fahrzeugposition, wenn das Erfassen des Fahrspurwechsels ein Ende des Fahrspurwechsels signalisiert.
Hierdurch kann zusätzlich ein Blinkerassistent dahingehend verbessert werden, dass ein zu frühes Abschalten der Fahrtrichtungsanzeige vermieden wird. Die hierfür durchgeführte Erfassung des Fahrspurwechsels kann beispielsweise durch ein Spurhalteunterstützungssystem und/oder einen Spurassistenten erfolgen, da diese häufig eine entsprechende Funktionalität zum Erfassen von Fahrspurwechseln bereits eingebaut haben. Möglich ist auch eine Erfassung basierend auf Navigationsinformation, beispielsweise von einem im Fahrzeug integrierten oder einem portablen Navigationssystem, sofern diese eine entsprechende Navigationsgenauigkeit besitzen.
Weiterhin kann das Verfahren durch eines oder mehrere der folgenden Merkmale gekennzeichnet sein:
Aktivieren oder Deaktivieren der Fahrtrichtungsanzeige abhängig von der detektierten Fahreraktivität bzw. Fahrzeugposition bei einem Spurwechsel;
Ausgeben einer akustischen und/oder visuellen Warnung abhängig von der detektierten Fahreraktivität bzw. Fahrzeugposition, wenn die Fahrtrichtungsanzeige nicht abgeschaltet wurde;
Beeinflussen der Dauer oder Zahl von Blinkvorgängen einer Fahrtrichtungsanzeige abhängig von der detektierten Fahreraktivität bzw. Fahrzeugposition;
Ausgeben einer akustischen und/oder visuellen Warnung abhängig von der detektierten Fahreraktivität bzw. Fahrzeugposition, die über eine vom Fahrer unterlassene Fahrtrichtungsanzeige informiert;
Nutzen von weiteren Umfeldinformationen zur Diskriminierung von Fehlauslösungen der Fahrtrichtungsanzeige;
Nutzen von Karteninformationen eines Navigationssystems zur Diskriminierung von Fehlauslösungen;
Einschränken der Verfügbarkeit der automatischen Fahrtrichtungsanzeige abhängig von Karteninformationen eines Navigationssystems auf bestimmte Straßentypen.

Das Verfahren kann ferner Informationen eines Verkehrszeichenerkennungssystems (TSR: Traffic Sign Recognition) auswerten und davon abhängig die automatisierte Fahrtrichtungsanzeige freigegeben oder sperren. Beispielsweise kann bei Erkennen eines Überholverbotsschildes die automatisierte Fahrtrichtungsanzeige gesperrt werden.

Eine weitere Ausführungsform der Erfindung betrifft eine Vorrichtung zur automatischen Fahrtrichtungsanzeige aufweisend
- Steuermittel für eine Fahrtrichtungsanzeige, die ausgebildet sind, ein Fahreraktivitätssignal zu empfangen, das von einem Spurhalteunterstützungssystem und/oder einem Spurassistenten erzeugt und ausgegeben wird, und abhängig vom empfangenen Fahreraktivitätssignal die Fahrtrichtungsanzeige zu aktivieren oder zu deaktivieren.

Die Vorrichtung kann beispielsweise als eigenständiges Modul implementiert sein, das in einem Fahrzeug verbaut werden kann. Möglich ist auch eine Implementierung als Schaltung, die zum Verbauen in einem Fahrerassistenzsystem oder einem Spurhalteunterstützungssystem oder einem Spurassistenten geeignet ist. Schließlich kann die Vorrichtung auch als Chip implementiert sein, der in einem System im Fahrzeug verbaut wird, beispielsweise in einem intelligenten Blinkerassistenzsystem.

Die Vorrichtung ist zur Durchführung eines Verfahrens nach der Erfindung und wie oben erläutert ausgebildet sein. Beispielsweise kann die Vorrichtung einen Prozessor mit Speicher aufweisen, wobei in dem Speicher ein Programm abgelegt ist, dass vom Prozessor ausgeführt werden kann, um das erfindungsgemäße Verfahren durchzuführen.
Nach der Erfindung kann ferner vorgesehen sein, dass der im Querführungssystem eines Kamera-basierten LK- oder LDW-Systems bestimmte Linientyp mit ausgewertet wird, damit eine Fahrtrichtungsanzeige nur in den Situation eingeschaltet wird, in denen auch wirklich ein Blinken erforderlich ist wird. Die Bildverarbeitung des LK- bzw. DW-Systems sollte hierzu in der Lage sein, beim Linientyp einer Fahrspurmarkierung zwischen gestrichelter Linie und durchgezogener Linie zu unterscheiden. Stellt das LK- oder LDW-System fest, dass sich das Fahrzeug über eine gestrichelte Linie bewegt, kann der Blinker aktiviert werden; stellt das System dagegen fest, dass sich das Fahrzeug über eine geschlossene Linie bewegt, bleibt der Fahrtrichtungsanzeiger inaktiv, solange der Fahrer ihn nicht selbst aktiviert. Weitere Informationen aus Radarsystemen oder anderen Fahrerassistenzsystemen können ferner erkennen, ob überhaupt Ausweichraum zur Verfügung steht, auf den ausgewichen werden kann. Beispielsweise kann in einer Situation, in der. eine Leitplanke erkannt und als solche klassifiziert wurde, das Blinken mangels Ausweichraums deaktiviert werden.
Weiterhin kann nach der Erfindung vorgesehen sein, dass der Straßentyp, auf dem sich das Fahrzeug bewegt, erkannt wird, und die automatisierte Fahrtrichtungsanzeige abhängig vom erkannten Straßentyp freigegeben oder gesperrt wird. Beispielsweise kann die automatisierte Fahrtrichtungsanzeige nur dann aktiviert werden, wenn die Straßentypen, in denen die Funktion "automatische Fahrtrichtungsanzeige" freigegeben ist, befahren wird. Beispielsweise kann bei Straßentyp "Landstraße" das System im inaktiven Zustand sein, bei Straßentyp "Autobahn" kann es dagegen arbeiten oder es kann hier aktiv geschaltet werden.

Schließlich kann die Erfindung auch vorsehen, dass die Blinkzeitdauer diskret auf ganze Blinkvorgänge reduziert oder verlängert werden kann.

Weitere Vorteile und Anwendungsmöglichkeiten der vorliegenden Erfindung ergeben sich aus der nachfolgenden Beschreibung in Verbindung mit dem/den in der/den Zeichnung(en) dargestellten Ausführungsbeispiel(en).

In der Beschreibung, in den Ansprüchen, in der Zusammenfassung und in der/den Zeichnung(en) werden die in der hinten angeführten Liste der Bezugszeichen verwendeten Begriffe und zugeordneten Bezugszeichen verwendet.

Die Zeichnung(en) zeigt/zeigen in
- Fig. 1: ein Blockdiagramm eines Ausführungsbeispiels einer Vorrichtung zur automatischen Fahrtrichtungsanzeige gemäß der Erfindung;
- Fig. 2-7: Ablaufdiagramme verschiedener Ausführungsbeispiele von Algorithmen, die das erfindungsgemäße Verfahren zur automatischen Fahrtrichtungsanzeige bzw. Schritte davon implementieren.

Im Folgenden können gleiche und/oder funktional gleiche Elemente mit den gleichen Bezugszeichen versehen sein.

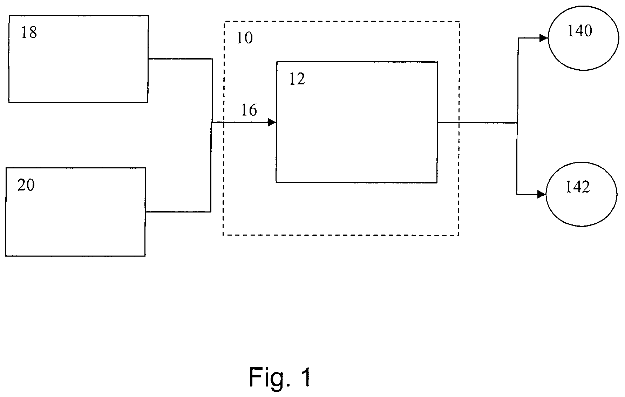

Fig. 1 zeigt eine Vorrichtung 10 zur automatischen Fahrtrichtungsanzeige. Die Vorrichtung 10 steuert Fahrtrichtungsanzeiger in Form von Blinkern 140 und 142 an, die an der linken bzw. rechten Seite eines Fahrzeugs angebracht sind, in dem die Vorrichtung 10 implementiert ist. Im Fahrzeug sind ferner ein Spurhalteunterstützungssystem 18 und ein Spurassistent 20 eingebaut sind. Von beiden Systemen 18 und 20 kann auch nur jeweils eines im Fahrzeug eingebaut sein, um die Zwecke der Erfindung zu erfüllen. Wesentlich ist jedoch, dass das im Fahrzeug eingebaute Spurhalteunterstützungssystem 18 und der Spurassistent 20 die Fahreraktivität oder Fahrzeugposition in Bezug auf Fahrspurmarkierungen detektieren können und jeweils ein Fahreraktivitätssignal bzw. Fahrzeugpositionssignal 16 ausgeben können.

Die Vorrichtung 10 kann insbesondere in ein Fahrerassistenzsystem in Form von Software integriert sein. Das Fahrerassistenzsystem kann beispielsweise einen Mikrokontroller und einen Programmspeicher aufweisen, in dem ein Steuerprogramm für Komfortfunktionen im Fahrzeug angelegt ist, das vom Mikrokontroller ausgeführt wird. Der Mikrokontroller kann entsprechend dem ausgeführten Programm verschiedene Komfortsysteme im Fahrzeug steuern, insbesondere eine automatische Fahrtrichtungsanzeige.

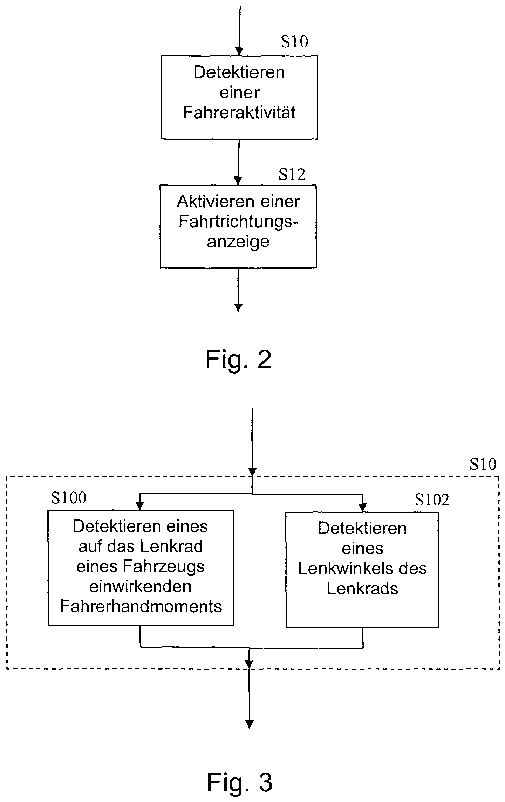

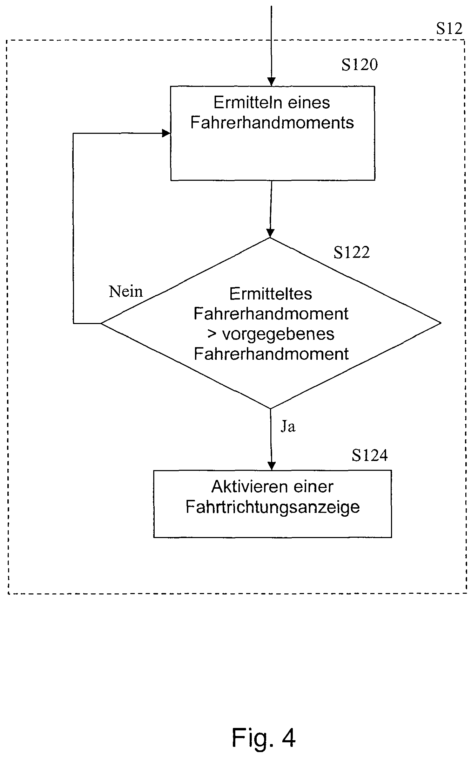

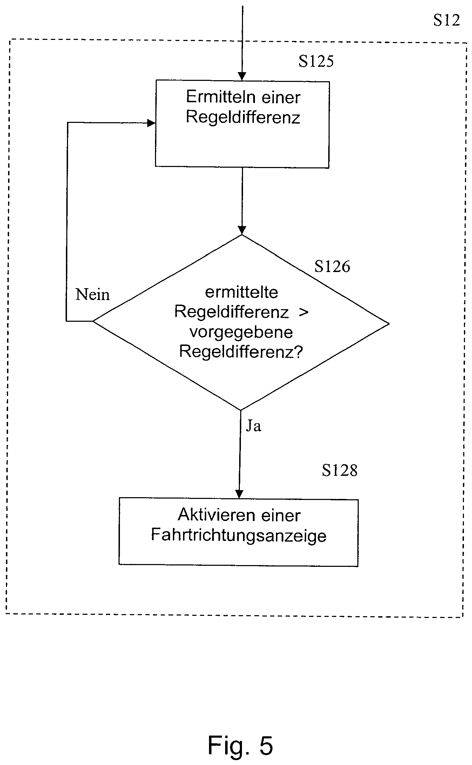

Im Folgenden werden verschiedene Ausführungsbeispiele von das erfindungsgemäße Verfahren zur automatischen Fahrtrichtungsanzeige implementierenden Algorithmen mit Hilfe der in den Fig. 2-7 gezeigten Flussdiagramme erläutert:
Fig. 2 zeigt ein vereinfachtes Ablaufdiagramm eines Algorithmus, der die automatische Fahrtrichtungsanzeige gemäß der Erfindung implementiert. Der Algorithmus weist zwei Schritte S10 und S12 auf: im Schritt S10 wird eine Fahreraktivität mittels eines Spurhalteunterstützungssystems und/oder eines Spurassistenten detektiert. Eine Fahreraktivität kann hierbei auf verschiedene Arten detektiert werden, wie in Fig. 2 gezeigt ist: eine erfindungsgemäße Möglichkeit besteht darin, ein Fahrerhandmoment des Fahrers (Handmoment), das auf das Lenkrad des Fahrzeugs einwirkt, zu detektieren (Unterschritt S100); zusätzlich kann auch ein Lenkwinkel detektiert werden (Unterschritt S102). Im nächsten Schritt S12 wird dann eine Fahrtrichtungsanzeige abhängig von der detektierten Fahreraktivität gesteuert. Beispielsweise wird der linke oder rechte Blinker aktiviert, wenn die detektierte Fahreraktivität ergibt, dass ein auf das Lenkrad entgegen dem bzw. im Uhrzeigersinn wirkendes Fahrerhandmoment einwirkt und ein Lenkwinkel entgegen dem bzw. im Uhrzeigersinn vorliegt, da der Fahrer in eine Fahrtrichtung nach links bzw. rechts lenkt.
Die Bestimmung des Handmoments, welches der Fahrer aufbringt, kann beispielsweise über einen in die Lenkstange in der Nähe des Lenkrads eingebundenen Lenkmomentensensor erfolgen. Hierbei wird die Torsion auf ein definiertes Stück gemessen, auf dass das Handmoment und die Trägheit des Lenkrades einwirkt. Alternativ kann das Moment, das als Torsion auf der Lenkstange und auf dem Lenkgetriebe lastet, durch zwei Lenkwinkelsensoren gemessen werden, und die Differenz der Lenkwinkel, die sich durch die Kräfte ergibt, kann gemessen und aufgrund der Kenntnis über das Torsionsverhalten für die Berechnung des Moments verwendet werden. Störgrößen, die sich aus der Masse der Lenkstange und des Lenkrades ergeben, können bei einer größeren Messzeit oder größeren Stellkräften aufgrund der Überwindung der Momente, welche die Lenkung im Querregelbetrieb aufbringt, vernachlässigt werden. Reicht dies nicht aus, weil das Fahrermoment möglichst schnell zu erfassen ist, kann das Moment, das sich durch die Lenkwinkeländerung bei bekanntem Trägheitsverhalten des Lenkrads ergibt, berechnet werden, und vom gemessenen Moment, das auf die Lenkstange oder das Lenksystem wirkt, wieder subtrahiert werden.
Wie die Fahrtrichtungsanzeige abhängig von einer detektierten Fahreraktivität gesteuert werden kann, wird im Detail anhand der folgenden Ausführungsbeispiele in Zusammenhang mit den Fig. 4 und 5 erläutert.

In Fig. 4 sind verschiedene Unterschritte des Schritts S12 gezeigt, mit denen als Fahreraktivität ein auf das Lenkrad des Fahrzeug wirkendes Fahrerhandmoment verarbeitet wird: zunächst wird im Schritt S120 das auf das Lenkrad wirkende Fahrerhandmoment ermittelt, beispielsweise mittels eines Fahrerhandmoment- oder Lenkwinkelsensors. Anschließend wird im Schritt S122 geprüft, ob das ermittelte Fahrerhandmoment größer als ein vorgegebenes Fahrerhandmoment ist, das danach bemessen ist, wie groß typischerweise ein minimales Fahrerhandmoment ist, welches bei einer beabsichtigten Fahrtrichtungsänderung des Fahrzeugs durch den Fahrer auf das Lenkrad ausgeübt werden muss. Wird im Schritt S122 festgestellt, dass das ermittelte Fahrerhandmoment kleiner als das vorgegebene ist, wird zurück in den Schritt S120 verzweigt, in dem wieder das aktuell auf das Lenkrad wirkende Fahrerhandmoment ermittelt wird. Andernfalls, wenn das ermittelte Fahrerhandmoment größer als das vorgegebene ist, wird mit Schritt S124 fortgefahren, in dem die Fahrtrichtungsanzeige entsprechend der Richtung des auf das Lenkrad einwirkenden Fahrerhandmoments aktiviert wird: bei einem gegen den Uhrzeigersinn wirkenden Fahrerhandmoment wird der linke, bei einem im Uhrzeigersinn wirkenden Fahrerhandmoment der rechte Blinker gesetzt.

In Fig. 5 sind ebenfalls verschiedene Unterschritte des Schritts S12 gezeigt, mit denen allerdings auf Basis einer Regeldifferenz zwischen gefahrenem Lenkwinkel und dem Solllenkwinkel zur Spurhaltung ermittelt wird. Ein Spurhalteunterstützungssystem kann den gefahrenen Lenkwinkel und den Solllenkwinkel messen und ausgeben. Anhand dieser beiden Lenkwinkelwerte kann im Schritt S125 eine Regeldifferenz ermittelt werden, also die Differenz zwischen dem aktuellen Lenkwinkel und dem Solllenkwinkel, den das Spurhalteunterstützungssystem zum Halten der Fahrspur vorgibt. Im darauffolgenden Schritt S126 kann die ermittelte Regeldifferenz mit einer vorgegebenen Regeldifferenz verglichen werden, die so bemessen ist, dass das Spurhalteunterstützungssystem bei der vorgegebenen Regeldifferenz gerade noch die Fahrspur halten kann. Ist die ermittelte Regeldifferenz kleiner, wird in den Schritt S125 zurück verzweigt und wieder die aktuelle Regeldifferenz ermittelt. Übersteigt dagegen die aktuelle die vorgegebene Regeldifferenz, wird im Schritt S128 die Fahrtrichtungsanzeige aktiviert, abhängig vom Vorzeichen des aktuellen Lenkwinkels: ist dieser negativ, wird gegen den Uhrzeigersinn gelenkt und der linke Blinker gesetzt. Ist der aktuelle Lenkwinkel dagegen positiv, wird im Uhrzeigersinn gelenkt und der rechte Blinker gesetzt.

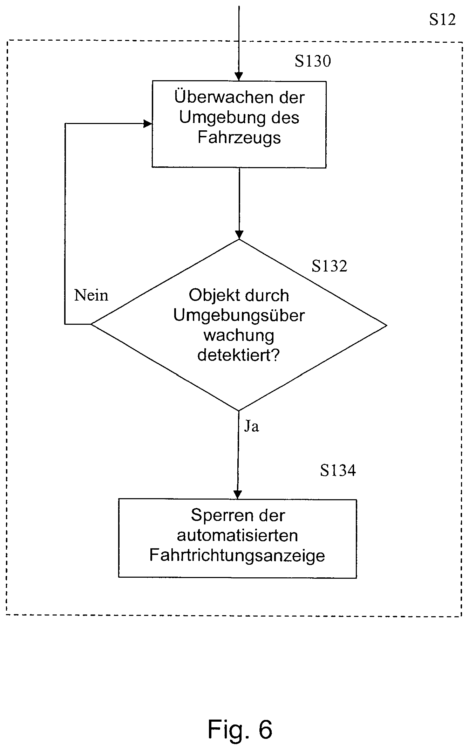

Fig. 6 zeigt ein weiteres Ausführungsbeispiel von Unterschritten des Schritts S12, das zusätzlich zu den in den Fig. 4 und 5 gezeigten Unterschritten ausgeführt werden kann, insbesondere als eine parallele Routine des Algorithmus zur Implementierung der automatischen Fahrtrichtungsanzeige. Im Schritt S130 kann mit einem Umgebungsüberwachungssystem, wie es beispielsweise für ein Fahrerassistenzsystem oder eine Adaptive Cruise Control (ACC) verwendet wird, die Umgebung des Fahrzeugs auf mögliche Kollisionsobjekte wie Fahrzeuge in Nachbarfahrspuren oder im toten Winkel des Fahrzeugs überwacht werden. Wird im Schritt S132 festgestellt, dass ein Objekt in der Umgebung des Fahrzeugs, insbesondere in der benachbarten Fahrspur oder im toten Winkel detektiert wurde, kann im Schritt S134 das automatische Aktivieren des Fahrtrichtungsanzeige gesperrt werden. Wird dagegen kein Objekt detektiert, kann wieder in den Schritt S130 verzweigt werden. Durch die Umgebungsüberwachung und Sperrung des automatischen Fahrtrichtungsanzeige kann somit eine erhöhte Sicherheit erzielt werden, da beispielsweise der Blinker nicht automatisch aktiviert wird, wenn ein potentielles Kollisionsobjekt detektiert wird.

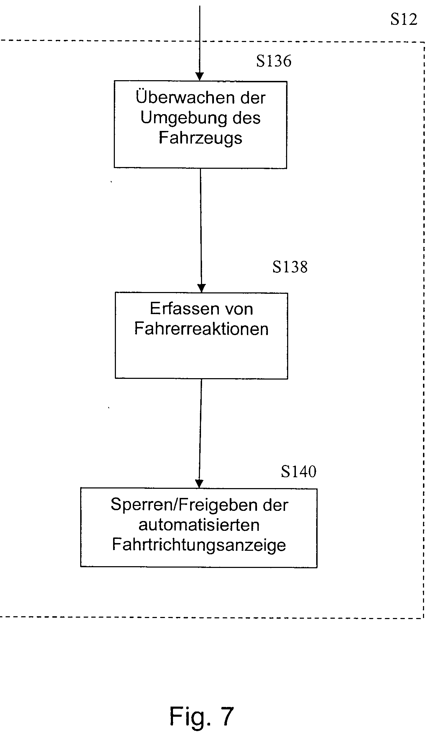

Die automatische Fahrtrichtungsanzeige kann auch abhängig von einer Überwachung des Innenraums des Fahrzeugs freigegeben oder gesperrt werden, wie in Fig. 7 dargestellt ist. Mit einer Kamera kann der Fahrzeuginnenraum überwacht werden, insbesondere der Fahrer (Schritt S136). Im Schritt S138 werden dann auf Basis der Innenraumüberwachung Fahrerreaktionen erfasst und ausgewertet. Hierzu werden die Kamerabilder von einem speziellen Bildverarbeitungsalgorithmus ausgewertet, der Bewegungen des Fahrers und insbesondere die Blickrichtung des Fahrers detektiert. Wird erkannt, dass der Fahrer für einen bestimmten Zeitraum nach rechts oder links blickt, kann das automatische Aktivieren der Fahrtrichtungsanzeige freigegeben bzw. zugelassen werden, da davon ausgegangen werden kann, dass der Fahrer eine Änderung der Fahrtrichtung beabsichtigt. Wird dagegen erkannt, dass der Fahrer längere Zeit geradeaus blickt, kann die automatische Fahrtrichtungsanzeige gesperrt werden, da davon ausgegangen werden kann, dass der Fahrer keine Fahrtrichtungsänderung beabsichtigt. Durch die Innenraumüberwachungsbasierte Freigabe oder Sperrung der automatischen Fahrtrichtungsanzeige kann die Zuverlässigkeit der Automatik verbessert werden, da ein weiteres Kriterium, nämlich die Fahrerreaktionen berücksichtigt werden.

Die automatische Fahrtrichtungsanzeige gemäß der Erfindung kann auch einen Blinkerassistenten verbessern, wie an dem im Folgenden erläuterten Ausführungsbeispiel verdeutlicht wird. Spurhalteunterstützungssysteme und Spurassistenten, die auf einer Kamerasensorik basieren, erfassen fortlaufend Fahrbahnmarkierungen und detektierten anhand der erfassten Fahrbahnmarkierungen Fahrspuren. Daher sind solche LDW- und LK-Systeme prinzipiell geeignet, Fahrspurwechsel eines Fahrzeugs vollständig, d.h. vom Beginn bis zum Ende zu erfassen. Informationen über einen Fahrspurwechsel, die von diesen Systemen bereitgestellt werden können, können nun zur Steuerung der automatischen Fahrtrichtungsanzeige verwendet werden, indem zunächst eine Fahrtrichtungsanzeige entweder mittels eines Blinkerassistenten vom Fahrer oder vollautomatisch nach Detektion des Überfahrens einer Fahrspurmarkierung aktiviert wird und die Fahrtrichtungsanzeige wieder deaktiviert wird, wenn durch das einen Fahrspurwechsel erfassende System ein Ende des Fahrspurwechsels signalisiert wird. Im Gegensatz zu herkömmlichen Blinkerassistenten, die eine Fahrtrichtungsanzeige in der Regel zeitgesteuert abschalten, erfolgt hierbei die Deaktivierung bzw. Abschaltung der Fahrtrichtungsanzeige intelligent auf Basis der vom LDW- oder LK-System. Diese Funktion kann in die Software eines LDW- oder LK-Systems integriert werden, indem ein Signal erzeugt wird, welches das Ende des Fahrspurwechsels signalisiert. Dieses Signal kann der Schaltung eines Blinkerassistenten zugeführt werden, um eine aktivierte Fahrtrichtungsanzeige zu deaktivieren. Alternativ oder auch zusätzlich zu den Informationen über Fahrspurwechsel von LDW- oder LK-Systemen können auch Navigationsinformationen zum Erfassen eines Fahrspurwechsels für die Deaktivierung einer Fahrtrichtungsanzeige verwendet werden.

Die Erfindung ermöglicht eine automatische Fahrtrichtungsanzeige unter Verwendung von Funktionalitäten von Spurhalteunterstützungssystemen oder Spurassistenten und kann insbesondere direkt in solche Systeme integriert werden, wodurch die Funktionalität dieser Systeme erweitert werden kann.

### Bezugszeichen

- 10: Vorrichtung zur automatischen Fahrtrichtungsanzeige
- 12: Aktivierungsmittel für eine Fahrtrichtungsanzeige 140, 142
- 140: Fahrtrichtungsanzeige
- 142: Fahrtrichtungsanzeige
- 16: Fahreraktivitätssignal
- 18: Spurhalteunterstützungssystem
- 20: Spurassistenten

## Patentansprüche

1. Verfahren zur automatischen Fahrtrichtungsanzeige mit den folgenden Schritten:
- Detektieren eines auf das Lenkrad eines Fahrzeugs einwirkenden Fahrerhandmoments (S100) und einer Fahrzeugposition mittels eines Spurhalteunterstützungssystems und/oder eines Spurassistenten (S10),
**dadurch gekennzeichnet, dass**
ein Aktivieren oder Deaktivieren einer Fahrtrichtungsanzeige abhängig von dem detektierten auf das Lenkrad eines Fahrzeugs einwirkenden Fahrerhandmoment und der Fahrzeugposition (S12) erfolgt.

2. Verfahren nach Anspruch 1,
**dadurch gekennzeichnet, dass**
das Detektieren eines auf das Lenkrad eines Fahrzeugs einwirkenden Fahrerhandmoments (S100) das Detektieren des Fahrerhandmoments während eines vorgegebenen Zeitraums aufweist.

3. Verfahren nach Anspruch 1 oder 2,
**dadurch gekennzeichnet, dass**
das Aktivieren einer Fahrtrichtungsanzeige abhängig vom detektierten Fahrerhandmoment und der Fahrzeugposition (S12) folgende Schritte aufweist:
- Vergleichen des detektierten Fahrerhandmoments mit einem vorgegebenen Fahrerhandmoment (S120) und
- Aktivieren der Fahrtrichtungsanzeige, wenn das Vergleichen ergibt, dass das detektierte Fahrerhandmoment das vorgegebene Fahrerhandmoment überschreitet (S122).

4. Verfahren nach einem der Ansprüche 1 bis 3,
**dadurch gekennzeichnet, dass**
zusätzlich zum Fahrerhandmoment ein Lenkwinkel (S102) mittels eines Spurhalteunterstützungssystems und/oder eines Spurassistenten detektiert wird und das Aktivieren einer Fahrtrichtungsanzeige abhängig vom detektierten Lenkwinkel (S12) folgende Schritte aufweist:
- Ermitteln einer Regeldifferenz zwischen dem detektierten Lenkwinkel und einem Solllenkwinkel für eine Spurhaltung (S125) und
- Aktivieren der Fahrtrichtungsanzeige, wenn die ermittelte Regeldifferenz eine vorgegebene Regeldifferenz überschreitet (S126, S128).

5. Verfahren nach einem der vorhergehenden Ansprüche,
**dadurch gekennzeichnet, dass**
das Aktivieren einer Fahrtrichtungsanzeige (S12) ferner folgende Schritte aufweist:
- Überwachen der Umgebung des Fahrzeugs mittels nach hinten und zur Seite gerichteten Sensoren eines Umgebungserfassungssystems (S130) und
- Sperren oder Freigeben der automatisierten Fahrtrichtungsanzeige in Abhängigkeit vom Überwachen (S132, S134).

6. Verfahren nach einem der vorhergehenden Ansprüche,
**dadurch gekennzeichnet, dass**
das Aktivieren einer Fahrtrichtungsanzeige ferner folgende Schritte aufweist:
- Messen der Fahrspurmarkierungen und Überwachen von Relativposition und Bewegung des Fahrzeugs zu den gemessenen Fahrspurmarkierungen und
- Sperren oder Freigeben der automatisierten Fahrtrichtungsanzeige in Abhängigkeit vom Überwachen.

7. Verfahren nach einem der vorhergehenden Ansprüche,
**dadurch gekennzeichnet, dass**
das Aktivieren einer Fahrtrichtungsanzeige (S12) ferner folgende Schritte aufweist:
- Überwachen des Innenraums des Fahrzeugs (S136),
- Erfassen von Reaktionen des Fahrers im Rahmen der Innenraumüberwachung (S138) und
- Freigeben oder Sperren des Aktivierens einer Fahrtrichtungsanzeige abhängig von einer erfassten Fahreraktion (S140).

8. Verfahren nach einem der Ansprüche 6 oder 7,
**dadurch gekennzeichnet, dass**
das Sperren oder Freigeben der automatisierten Fahrtrichtungsanzeige ferner abhängig von einer Bewertung von Wahrscheinlichkeitsinformationen durchgeführt wird, wobei eine Wahrscheinlichkeit für einen gewollten Fahrspurwechsel aus Fahrzeuginnenraum- oder Umgebungsüberwachungsinformation oder Relativpositionsinformationen des Fahrzeugs zu Fahrspurmarkierungen ermittelt wird.

9. Verfahren nach einem der vorhergehenden Ansprüche,
ferner **gekennzeichnet durch** die folgenden Schritte:
- Aktivieren einer Fahrtrichtungsanzeige mittels eines Blinkerassistenten vom Fahrer, in dem Fall, dass die Fahrtrichtungsanzeige vorher nicht aktiviert ist,
- Erfassen eines Fahrspurwechsels mittels eines Spurhalteunterstützungssystems und/oder eines Spurassistenten und/oder basierend auf Navigationsinformationen und
- Deaktivieren der Fahrtrichtungsanzeige abhängig von dem detektierten Fahrerhandmoment und der Fahrzeugposition, wenn das Erfassen des Fahrspurwechsels ein Ende des Fahrspurwechsels signalisiert.

10. Verfahren nach einem der vorhergehenden Ansprüche, ferner **gekennzeichnet durch** eines oder mehrere der folgenden Merkmale:
Aktivieren oder Deaktivieren der Fahrtrichtungsanzeige abhängig von dem detektierten Fahrerhandmoment und der Fahrzeugposition bei einem Spurwechsel;
Ausgeben einer akustischen und/oder visuellen Warnung abhängig von dem detektierten Fahrerhandmoment und der Fahrzeugposition, wenn die Fahrtrichtungsanzeige nicht abgeschaltet wurde;
Beeinflussen der Dauer oder Zahl von Blinkvorgängen einer Fahrtrichtungsanzeige abhängig von dem detektierten Fahrerhandmoment und der Fahrzeugposition;
Ausgeben einer akustischen und/oder visuellen Warnung abhängig von dem detektierten Fahrerhandmoment bzw. der Fahrzeugposition, die über eine vom Fahrer unterlassene Fahrtrichtungsanzeige informiert;
Nutzen von weiteren Umfeldinformationen zur Diskriminierung von Fehlauslösungen der Fahrtrichtungsanzeige;
Nutzen von Karteninformationen eines Navigationssystems zur Diskriminierung von Fehlauslösungen;
Einschränken der Verfügbarkeit der automatischen Fahrtrichtungsanzeige abhängig von Karteninformationen eines Navigationssystems auf bestimmte Straßentypen.

11. Verfahren nach einem der vorhergehenden Ansprüche,
**dadurch gekennzeichnet, dass**
ferner Informationen eines Verkehrszeichenerkennungssystems ausgewertet und davon abhängig die automatisierte Fahrtrichtungsanzeige freigegeben oder gesperrt wird.

12. Vorrichtung (10) zur automatischen Fahrtrichtungsanzeige aufweisend Steuermittel (12) für eine Fahrtrichtungsanzeige (140, 142), die ausgebildet sind, ein Fahrerhandmomentsignal (16) und Fahrzeugpositionssignal zu empfangen, das von einem Spurhalteunterstützungssystem (18) und/oder einem Spurassistenten (20) erzeugt und ausgegeben wird,
**dadurch gekennzeichnet, dass**
die Steuermittel (12) ausgebildet sind, abhängig vom empfangenen Fahrerhandmomentsignal (14) und Fahrzeugpositionssignal die Fahrtrichtungsanzeige (140, 142) zu aktivieren oder zu deaktivieren und die Vorrichtung zudem zur Durchführung eines Verfahrens nach einem der vorherigen Ansprüche ausgebildet ist.

## Claims

1. A method for automatic driving direction indication having the following steps:
- detecting a driver's manual torque (S100) acting on the steering wheel of a vehicle and detecting a vehicle position by means of a lane keeping assist system and/or a lane departure warning system (S10), **characterized in that** an activation or deactivation of a driving direction indicator is carried out depending on the detected driver's manual torque acting on the steering wheel of a vehicle and depending on the vehicle position (S12).

2. The method according to Claim 1,
**characterized in that**
the detection of a driver's manual torque (S100) acting on the steering wheel of a vehicle includes the detection of the driver's manual torque during a predetermined time period.

3. The method according to Claim 1 or 2,
**characterized in that**
the activation of a driving direction indicator depending on the detected driver's manual torque and the vehicle position (S12) has the following steps:
- comparing the detected driver's manual torque with a predetermined driver's manual torque (S120), and
- activating the driving direction indicator when the results of the comparison show that the detected driver's manual torque exceeds (S122) the predetermined driver's manual torque.

4. The method according to any one of Claims 1 to 3,
**characterized in that**
in addition to the driver's manual torque a steering angle (S102) is detected by means of a lane keeping assist system and/or a lane departure warning system, and the activation of a driving direction indicator depending on the detected steering angle (S12) has the following steps:
determining a control deviation between the detected steering angle and a target steering angle for keeping in lane (S125), and activating the driving direction indicator when the determined control deviation exceeds (S126, S128) a predetermined control deviation.

5. The method according to any one of the preceding claims,
**characterized in that**
the activation of a driving direction indicator (S12) further has the following steps:
- monitoring the surroundings of the vehicle by means of sensors of an environment detection system (S130) which are directed toward the rear and toward the side, and
- disabling or enabling the automatic driving direction indicator depending on the monitoring (S132, S134).

6. The method according to any one of the preceding claims,
**characterized in that**
the activation of a driving direction indicator further has the following steps:
- measuring the lane markings and monitoring relative position and movement of the vehicle with respect to the measured lane markings, and
- disabling or enabling the automatic driving direction indicator depending on the monitoring.

7. The method according to any one of the preceding claims,
**characterized in that**
the activation of a driving direction indicator (S12) further has the following steps:
- monitoring the interior of the vehicle (S136),
- detecting reactions of the driver in the course of the interior monitoring (S138), and
- enabling or disabling the activation of a driving direction indicator depending on a detected driver reaction (S140).

8. The method according to any one of Claims 6 or 7,
**characterized in that**
the disabling or enabling of the automated driving direction indicator is further carried out depending on an evaluation of probability information, wherein a probability is determined for a desired lane change from vehicle interior information or environment monitoring information or relative position information of the vehicle with respect to lane markings.

9. The method according to any one of the preceding claims,
further **characterized by** the following steps:
- activating a driving direction indicator by means of a turn signal assistant by the driver in the event that the driving direction indicator has not been previously activated,
- detecting a lane change by means of a lane keeping assist system and/or lane departure warning system and/or based on navigation information, and deactivating the driving direction indicator depending on the detected driver's manual torque and vehicle position when the detection of the lane change indicates an end of the lane change.

10. The method according to any one of the preceding claims, further **characterized by** one or more of the following features:
activating or deactivating the driving direction indicator depending on the detected driver's manual torque and vehicle position during a lane change;
outputting an acoustic and/or visual alert depending on the detected driver's manual torque and the vehicle position when the driving direction indicator has not been switched on;
influencing the duration or quantity of turn signal processes of a driving direction indicator depending on the detected driver's manual torque and the vehicle position;
outputting an acoustic and/or visual alert depending on the detected driver's manual torque or the vehicle position which warns that the driver has omitted to indicate a driving direction;
using further environment information for distinguishing erroneous triggering of the driving direction indicator;
restricting the availability of the automatic driving direction indication to particular road types depending on map information of a navigation system.

11. The method according to any one of the preceding claims,
**characterized in that**,
additionally, information of a traffic sign recognition system is evaluated and the automatic driving direction indicator is enabled or disabled depending thereon.

12. A device (10) for automatic driving direction indication having control means (12) for a driving direction indicator (140, 142) which are configured to receive a driver's manual torque signal (16) and vehicle position signal which is generated and outputted by a lane keeping assist system (18) and/or a lane departure warning system (20),
**characterized in that**
the control means (12) are configured to activate or deactivate the driving direction indicator (140, 142) depending on the received driver's manual torque signal (14), and the device is additionally configured to carry out a method according to any one of the preceding claims.

## Revendications

1. Procédé d'indication automatique de changement de direction comprenant les étapes suivantes :
- détection d'un couple appliqué par la main d'un conducteur agissant sur le volant d'un véhicule (S100) et d'une position du véhicule au moyen d'un système d'assistance au maintien de la trajectoire et/ou d'un assistant de maintien sur la voie (S10), **caractérisé en ce que**
une activation ou désactivation d'une indication de changement de direction est effectuée en fonction du couple appliqué par la main du conducteur détecté agissant sur le volant d'un véhicule et de la position du véhicule (S12).

2. Procédé selon la revendication 1,
**caractérisé en ce que**
la détection d'un couple appliqué par la main du conducteur agissant sur le volant d'un véhicule (S100) comporte la détection du couple appliqué par la main du conducteur pendant une période prédéfinie.

3. Procédé selon la revendication 1 ou 2,
**caractérisé en ce que**
l'activation d'une indication de changement de direction en fonction du couple appliqué par la main du conducteur détecté et de la position de véhicule (S12) comporte les étapes suivantes :
- comparaison du couple appliqué par la main du conducteur détecté avec un couple appliqué par la main du conducteur prédéfini (S120) et
- activation de l'indication de changement de direction quand il résulte de la comparaison que le couple appliqué par la main du conducteur détecté dépasse (S122) le couple appliqué par la main du conducteur prédéfini.

4. Procédé selon une des revendications 1 à 3,
**caractérisé en ce que**,
en plus du couple appliqué par la main du conducteur, un angle de braquage (S102) est détecté au moyen d'un système d'assistance au maintien de la trajectoire et/ou d'un assistant de maintien sur la voie et l'activation d'une indication de changement de direction en fonction de l'angle de braquage détecté (S12) comporte les étapes suivantes :
- détermination d'un écart de régulation entre l'angle de braquage détecté et un angle de braquage de consigne pour un maintien sur la voie (S125) et
- activation de l'indication de changement de direction, quand l'écart de régulation déterminé dépasse un écart de régulation prédéfini (S126, S128).

5. Procédé selon l'une quelconque des revendications précédentes,
**caractérisé en ce que**
l'activation d'une indication de changement de direction (S12) comporte en outre les étapes suivantes :
- surveillance de l'environnement du véhicule au moyen de capteurs orientés vers l'arrière et vers le côté d'un système de détection de l'environnement (S130) et
- blocage ou déblocage de l'indication automatisée de changement de direction en fonction de la surveillance (S132, S134).

6. Procédé selon l'une quelconque des revendications précédentes,
**caractérisé en ce que**
l'activation d'une indication de changement de direction comporte en outre les étapes suivantes :
- mesure des marquages au sol et surveillance de la position relative et du déplacement du véhicule par rapport aux marquages au sol mesurés et
- blocage ou déblocage de l'indication automatisée de changement de direction en fonction de la surveillance.

7. Procédé selon l'une quelconque des revendications précédentes,
**caractérisé en ce que**
l'activation d'une indication de changement de direction (S12) comporte en outre les étapes suivantes :
- surveillance de l'habitacle du véhicule (S136),
- détection de réactions du conducteur dans le cadre de la surveillance de l'habitacle (S138) et
- déblocage ou blocage de l'activation d'une indication de changement de direction en fonction d'une réaction détectée du conducteur (S140).

8. Procédé selon une des revendications 6 ou 7,
**caractérisé en ce que**
le blocage ou déblocage de l'indication automatisée de changement de direction est effectué en outre en fonction d'une évaluation d'informations de probabilité, une probabilité d'un changement de voie intentionnel étant déterminée à partir d'informations de surveillance de l'habitacle du véhicule ou de l'environnement ou d'informations de position relative du véhicule par rapport aux marquages au sol.

9. Procédé selon l'une quelconque des revendications précédentes,
**caractérisé en outre par** les étapes suivantes :
- activation d'une indication de changement de direction au moyen d'un clignotant confort du conducteur, dans le cas où l'indication de changement de direction n'a pas été activée auparavant,
- détection d'un changement de voie au moyen d'un système d'assistance au maintien de la trajectoire et/ou d'un assistant de maintien sur la voie et/ou sur la base d'informations de navigation et
- désactivation de l'indication de changement de direction en fonction du couple appliqué par la main du conducteur détecté et de la position du véhicule, quand la détection du changement de voie signale une fin du changement de voie.

10. Procédé selon l'une quelconque des revendications précédentes, **caractérisé en outre par** une ou plusieurs des caractéristiques suivantes :
activation ou désactivation de l'indication de changement de direction en fonction du couple appliqué par la main du conducteur détecté et de la position du véhicule lors d'un changement de voie ;
émission d'un avertissement acoustique et/ou visuel en fonction du couple appliqué par la main du conducteur détecté et de la position du véhicule, quand l'indication de changement de direction n'a pas été arrêtée ;
influence sur la durée ou le nombre de processus de clignotement d'une indication de changement de direction en fonction du couple appliqué par la main du conducteur détecté et de la position du véhicule ;
émission d'un avertissement acoustique et/ou visuel en fonction du couple appliqué par la main du conducteur détecté ou de la position du véhicule, qui informe qu'une indication de changement de direction a été omise par le conducteur ;
utilisation d'autres informations sur l'environnement pour distinguer des déclenchements erronés de l'indication de changement de direction ;
utilisation d'informations cartographiques d'un système de navigation pour distinguer des déclenchements erronés ;
limitation de la disponibilité de l'indication automatique de changement de direction à des types de route précis en fonction d'informations cartographiques d'un système de navigation.

11. Procédé selon l'une quelconque des revendications précédentes,
**caractérisé en ce que**
des informations d'un système de reconnaissance des panneaux de signalisation sont en outre évaluées et l'indication automatisée de changement de direction est débloquée ou bloquée en fonction de cette évaluation.

12. Dispositif (10) d'indication automatique de changement de direction comportant des moyens de commande (12) pour une indication de changement de direction (140, 142), qui sont conçus pour recevoir un signal de couple appliqué par la main d'un conducteur (16) et un signal de position du véhicule, qui sont générés et émis par un système d'assistance au maintien de la trajectoire (18) et/ou un assistant de maintien sur la voie (20),
**caractérisé en ce que**
les moyens de commande (12) sont conçus pour activer ou désactiver l'indication de changement de direction (14) en fonction du signal de couple appliqué par la main du conducteur (14) et du signal de position du véhicule reçus et le dispositif est en outre conçu pour l'exécution d'un procédé selon l'une quelconque des revendications précédentes.
